# FASCICULE DE BREVET EUROPEEN

(11) **EP 1 456 076 B1**
(45) Date de publication et mention de la délivrance du brevet: **13.02.2008**
(21) Numéro de dépôt: 02805411.2
(22) Date de dépôt: 20.12.2002
(51) Int. Cl.: B62D 27/02, B62D 25/20, F16B 5/04

(54) **PROCEDE D'ASSEMBLAGE D'UN SOUBASSEMENT DE VEHICULE ET SOUBASSEMENT**
VERFAHREN ZUR MONTAGE EINES FAHRZEUGUNTERRAHMENS UND UNTERRAHMEN
METHOD FOR ASSEMBLING A VEHICLE UNDERSTRUCTURE AND UNDERSTRUCTURE

(30) Priorité: 21.12.2001 FR 0116760
(43) Date de publication de la demande: 15.09.2004
(73) Titulaire: Vermandé, Patrick, 88300 Neufchâteau (FR)
(72) Inventeur: Vermandé, Patrick, 88300 Neufchâteau (FR)
(74) Mandataire: Munier, Laurent
(86) Numéro de dépôt international: PCT/FR2002/004501
(87) Numéro de publication internationale: WO 2003/053770

(56) Documents cités:
- EP-A- 0 291 380
- WO-A-02/49905
- FR-A- 2 474 989
- FR-A- 2 811 955
- US-B1- 6 398 261
- BARTSCH G ET AL: "BAUTEILE AUS BLECHSCHICHTEN" LASER PRAXIS, CARL HANSER VERLAG, MUENCHEN, DE, no. 2, juin 2001 (2001-06), pages 28-29, XP001053825 ISSN: 0937-7069

## Description

L'invention se rapporte au soubassement de carrosserie. En premier lieu, elle concerne un procédé pour l'assemblage des pièces du soubassement.

Elle concerne plus particulièrement les pièces d'un faux châssis pour véhicules automobiles, notamment faux-châssis de camion, de camionnette. Lesdites pièces comprennent des tôles, des éléments en tôle pliée métalliques soudée ou non et des pièces spécifiques. Ces dernières sont dites pièces spécifiques pouvant faire ou ne pas faire office d'interfaces relatives à la carrosserie ou au châssis selon leur destination dans l'assemblage au châssis.

Les soubassements connus sont réalisés traditionnellement avec des profilés métalliques mécano-soudés puis protégés de la corrosion par un primaire anticorrosion laqué ou une galvanisation à chaud.

Pour renforcer un véhicule existant, l'assemblage connu des profilés est réalisé sur ledit véhicule. Les pièces sont positionnées manuellement avec mesure de chaque cote et équerrage.

Ainsi, ce type de profilés avec son mode d'assemblage spécifique impose un travail prolongé et diverses opérations lors, de l'assemblage au châssis.

Exceptionnellement lors de série, le positionnement de certains profilés s'effectue sur gabarit.

Dans tous les cas l'assemblage connu présente les inconvénients d'exiger un travail long et salissant. II nécessite la présence du véhicule.

Un assemblage du type précité est connu du document FR-A-2 474 989, dont la description couvre les caractéristiques du préambule de la revendication 1.

L'invention permet de remédier à ces inconvénients. A cet effet le procédé selon l'invention se caractérise en ce que lesdites pièces étant des tôles, éléments en tôle pliée et pièces spécifiques, les tôles galvanisées sont superposées avant l'assemblage au moyen de perçage précis par commande numérique et lesdits perçages précis aptes à coopérer entre eux formant un système modulaire à souhait, permettant la réalisation dudit soubassement par assemblage desdites pièces éléments en tôle pliée et pièces spécifiques de liaison avec des rivets à sertir, l'ensemble des pièces étant galvanisé avant assemblage dudit soubassement destiné à être assemblé au châssis de véhicule.

Ainsi, cet ensemble forme un système modulaire qui présente l'avantage d'un assemblage précis des pièces pour former le soubassement, à assembler au châssis en évitant les prises de mesures spécifiques audit soubassement. Grâce aux rivets à sertir combinés à l'absence de mesure spécifique, l'assemblage est rapide. L'emploi d'un outillage unique et léger améliore l'ergonomie du travail.

Dans le but d'éviter la soudure effectuée sur les pièces connues en acier revêtues par électro-zingage ou galvanisation, suivant le procédés selon l'invention, les pièces de l'ensemble, tôles, éléments en tôles pliés, (profilés métalliques) et pièces spécifiques sont galvanisées avant assemblage. Là soudure de l'assemblage connu brûle le revêtement de surface desdites pièces, ce qui engendre une oxydation. De plus, cette soudure est polluante en libérant des vapeurs de zinc, nocives pour l'homme de métier et l'environnement.

Afin de conserver les pièces sans oxydation, les pièces galvanisées 3, 4, 5 sont en alliage à base d'aluminium ou en métal du type acier inoxydable ou acier noir.

Pour d'éviter de détériorer le véhicule grâce à un travail non salissant et de supprimer les mesures lors de l'assemblage, les perçages sont espacés sur les pièces à des distances précises, en particulier au moyen d'une poinçonneuse à commande numérique, afin de constituer une échelle de mesure pour le positionnement des pièces, éléments de tôle pliée ou tôles lors de l'assemblage.

Dans le but de standardiser et de réduire la quantité de type de pièces nécessaires, sont superposées avant l'assemblage des tôles galvanisées au moyen des perçages précis par commande numérique. Les tôles galvanisées et des rivets à sertir lors de l'assemblage servent de manière à former des tôles épaisses. Ce qui permet d'éviter la nécessiter de stocker et utiliser des tôles épaisses jusqu'à 8 mm.

L'invention à encore pour objet un soubassement de carrosserie, en particulier d'un faux châssis de différents modèles ou type de véhicules automobiles notamment camion et/ou camionnette comprenant des éléments en tôle pliée, pré soudée ou non et des pièces spécifiques de liaison galvanisée de soubassement qui présentent des perçages précis aptes à coopérés entres-eux et qui sont assemblés avec des rivets à sertir continuant de manière respectueuse l'assemblage du châssis du véhicule.

D'autres avantages de la présente invention ressortiront de la lecture des dessins qui représentent un exemple non limitatif d'exécution de l'invention. Les dessins présentent :
- Fig. 1 un ensemble de pièces formant système modulaire selon l'invention vue de coté,
- Fig. 2 une représentation en perspective d'une tôle épaisse formée par la superposition de tôles selon l'invention,
- Fig. 3 une représente vue en éclaté un soubassement selon l'invention avec l'ensemble de pièces de la Fig.1 assemblé,
- Fig. 4 une représentation vue de gauche en élévation d'un soubassement assemblé sur camion.

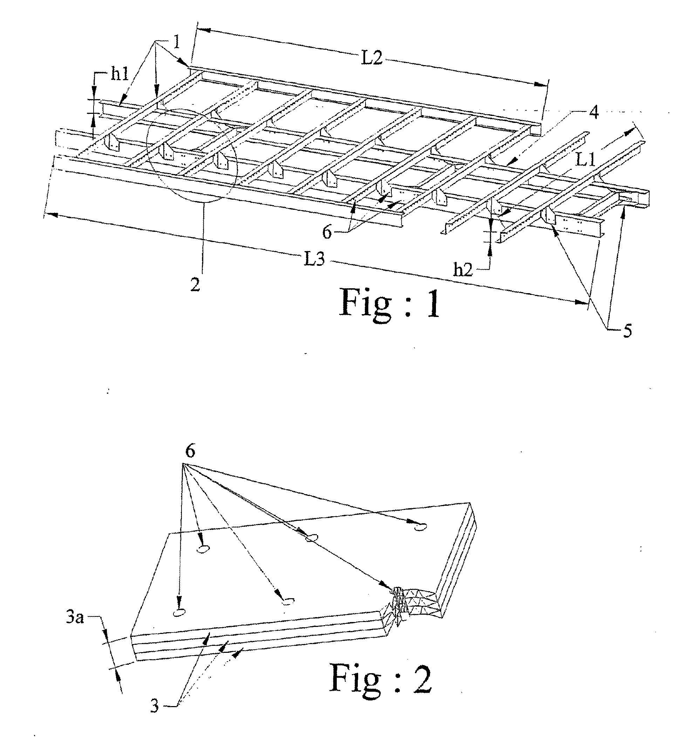

La Fig. 1 représente un ensemble de pièces 1 permettant la mise en oeuvre du procédé selon l'invention. Lesdites pièces 1 forment un système modulaire 2 ; elles sont disposées en un élément de pièces superposés. Ces pièces 1 sont des tôles 3, des éléments de tôle pliée 4 et des pièces spécifiques 5. Ces dernières 5 sont des interfaces relatives à la carrosserie et au châssis d'un véhicule. Les différentes pièces 1, tôles 3, profilés métalliques 4 et pièces spécifiques 5 sont galvanisées avant l'assemblage. Les profilés 4 et les tôles 3 sont standards aux dimensions, longueur I1, I2 ou I3, largeur et hauteur h1, h2 des pièces de châssis assemblées. Elles présentent des perçages précis 6 réalisés par machine à commande numérique. Ces dimensions standards, y compris les distances entre les perçages 6 font que l'ensemble forme le système modulaire 2 qui permet la réalisation dudit soubassement par assemblage des pièces 1 avec le passage des rivets à sertir dans les perçages.

L'espacement des perçages à des distances précises est obtenu au moyen d'une poinçonneuse à commande numérique. Ainsi les perçages se superposent et constituent une échelle de mesure pour le positionnement des pièces 1, éléments de tôle pliée 4 ou tôles 3 lors de l'assemblage.

Dans une première étape, trois tôles galvanisées fines 3 représentées Fig. 2 sont superposées avant l'assemblage en alignant les perçages 6 traversés par des rivets à sertir de manière à former des tôles épaisses 3a, jusqu'à 8 mm d'épaisseur. Cette superposition permet de stocker des tôles métalliques 3 qui serviront aussi bien de tôles fines 3 ou épaisses 3a, dans ce dernier cas suite à la superposition lors de l'assemblage des pièces 1. Il est possible de faire varier le nombre de tôles superposées 3a suivant l'épaisseur recherchée.

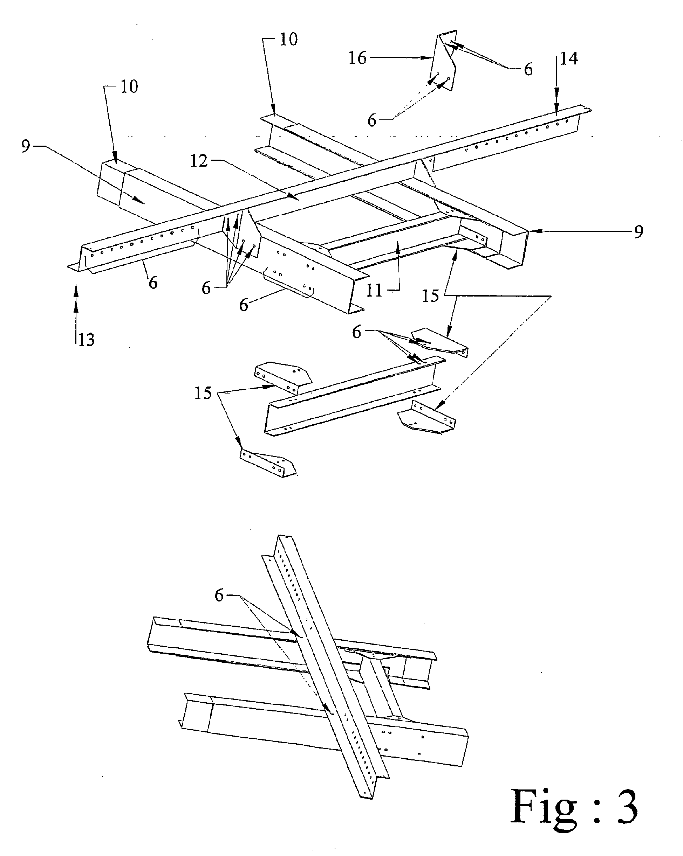

Comme représenté sur la Fig. 3 les pièces 1 sont de dimensions standard, c'est-à-dire qui permettent en deuxième étape l'assemblage en un soubassement 7 d'un châssis 8 de véhicule. Lesdites pièces 1 sont des éléments en tôle pliée pré soudée 4, deux pièces latérales ou faux châssis en U 9, dans lesquelles viennent respectivement deux fourreaux 10 de faux châssis eux aussi formés par des profilés en U. Une entretoise 11 de faux châssis formée également par des profilés en U relie les deux séries latérales de faux châssis 9 chacun avec leur fourreau 10. Une traverse 12 est fixée sur les deux faux châssis 9. Pour permettre l'accès des outils de visserie la traverse en tôle, pliée 12 présente une section en Z, le plat parallèle inférieur 13 étant posé sur les faces supérieures des faux châssis 9. Le deuxième plat parallèle 14 formant la face supérieure. Les pièces spécifiques 5 permettent la liaison dans la continuation du châssis d'origine des éléments en tôle pliée 4. Quatre supports intérieurs 15 relient les faces internes supérieures des fourreaux 10 aux extrémités des faces supérieures de l'entretoise 11. Le nombre d'entretoises 11 avec ses quatre supports intérieurs 15 sera adapté à la longueur du soubassement. Il en est de même pour les traverses 12, chacune desdites traverses 12 est reliée par deux consoles 16 pliées en Z et fixées respectivement aux faux châssis 9. Les perçages précis 6 réalisés par au moins une machine à commande numérique sur les éléments en tôle pliée 4, supports intérieurs 15, consoles 16 et les pièces spécifiques 5, faux châssis 9, fourreaux 10, entretoise 11, traverse 12 permettent la réalisation dudit soubassement sans soudure en formant un système 2 modulaire à souhait. Lesdites pièces 1 sont assemblées fixées avec des rivets à sertir (non représentés) qui traversent les perçages précis.

Le sertissage permet d'assembler les tôles 3, aux pièces spécifiques 5, au véhicule et aux éléments de tôle pliée 4. Les tôles 3 et les pièces spécifiques 5 sont de différentes dimensions leur permettant de former le soubassement d'un autre modèle de véhicule.

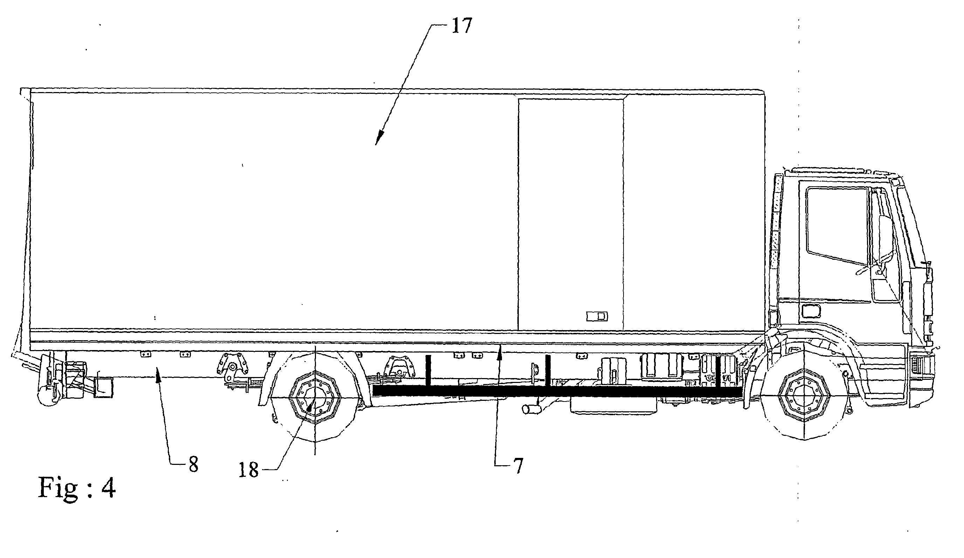

La Fig. 4 représente le faux châssis 9 de véhicules selon l'invention assemblé sur un fourgon 17. Cet assemblage montre une réalisation spécifique d'un soubassement 7 qui forme le châssis de cabine 18 du fourgon 17 et s'étend au-delà des roues arrières 19.

Ainsi, le procédé d'assemblage des pièces 1 selon l'invention présente les caractéristiques suivantes :
- les pièces spécifiques de liaison 5 présentent des parties en tôle plate, percées de perçages précis, puis pliées à au moins une extrémité de manière à joindre des éléments en tôle pliée 4 et ouvertes à d'autres extrémités pour s'adapter aux différentes dimensions des éléments en tôle pliée 4.
- l'assemblage des pièces 1 de soubassement d'un châssis de cabine 8 de véhicule 9, lesdites pièces 1 pouvant être conforme à un ensemble tel que définie ci-dessus, les pièces 1 étant au moins en partie des tôles 3 des éléments en tôle pliée 4 et des pièces spécifiques 5, ces dernières dites pièces spécifiques relatives à la carrosserie et au châssis, les dites pièces étant galvanisées, percées et standard avec des dimensions, longueurs, largeurs et positionnements précis des perçages 6 par commande numérique, correspondant aux dimensions de pièces de châssis assemblés
- comporte les étapes successives suivantes :
   * superposition de plusieurs tôles galvanisées 3 assemblées par rivet à sertir pour former une ou plusieurs tôles d'épaisseur accrue 3a,
   * assemblage rapide des pièces y compris les tôles superposées 3a par coïncidence lors de la superposition des perçages et sertissage à travers lesdits perçages 6 sans mesure spécifique,
   * montage de l'assemblage par positionnement des perçages précis 6 respectueux de l'assemblage sur le châssis du véhicule 10,tenant compte des éléments présents, tels qu'éléments électroniques de bord, conduite en Rilsan.

Signes de références
- 1: pièces,
- 2: système modulaire,
- 3: tôles,
- 4: éléments en tôle pliée profilés métalliques,
- 5: pièces spécifiques,
- 6: perçages précis,
- 7: soubassement,
- 8: châssis,
- 9: faux châssis,
- 10: fourreaux,
- 11: entretoise,
- 12: traverse
- 13: plat parallèle inférieur,
- 14: plat parallèle supérieur,
- 15: supports intérieurs,
- 16: consoles,
- 17: fourgon,
- 18: cabine,
- 19: roues arrières
- I1, I2 ou I3: longueurs des pièces 1
- h1 ou: h2 hauteurs des pièces 1.

Bien que l'invention ait, été décrite en liaison avec des structures particulières, elle n'y est nullement limitée et on peut y apporter de nombreuses variantes, comme par exemple remplacer l'entretoise 11 en Z par un profilé en U ou remplacer les profilés en U par des profilés en I, modifier les formes des supports intérieurs 15 ou des consoles 16, ajouter des pièces, etc.

Les combinaisons des différentes réalisations représentées sur les dessins ou décrites ci-dessus ne sortent pas du cadre de l'invention.

Les signes de références insérés après les caractéristiques techniques mentionnées dans les revendications ont pour seul but de faciliter la compréhension de ces dernières et n'en limitent aucunement la portée.

## Revendications

1. Procédé pour l'assemblage des pièces d'un soubassement de carrosserie d'un faux châssis pour véhicules automobiles (17), notamment faux châssis de camion et faux châssis de camionnette, lesdites pièces (1) comprenant des éléments en tôle pliée pré-soudée (4) ou non et des pièces spécifiques (5), ces dernières dites pièces spécifiques relatives à la carrosserie et au châssis, les éléments en tôle pliée (4) et les pièces spécifiques (5) de soubassement (7) d'un châssis assemblé, **caractérisé en ce que** lesdites pièces (1) étant des tôles (3), éléments en tôle pliée (4) et pièces spécifiques (5), les tôles galvanisées (3) sont superposées avant l'assemblage au moyen de perçage précis (6) par commande numérique et lesdits perçages précis (6) aptes à coopérer entre eux formant un système modulaire (2) à souhait, permettant la réalisation dudit soubassement (7) par assemblage desdites pièces (1) éléments en tôle pliée (4) et pièces spécifiques de liaison (5) avec des rivets à sertir, l'ensemble des pièces (1) étant galvanisé avant assemblage dudit soubassement (7) destiné à être assemblé au châssis de véhicule (7)

2. Procédé selon la revendication 1, dans lequel les perçages sont espacés sur les pièces (1) à des distances précises , en particulier au moyen d'une poinçonneuse à commande numérique, afin de constituer une échelle de mesure pour le positionnement des pièces (1), ou tôles (3) éléments en tôle pliée (4) et pièces spécifiques de liaison (5) lors de l'assemblage.

3. Procédé selon l'une des revendications 1 ou 2, dans lequel les tôles galvanisées et des rivets à sertir lors de l'assemblage servent de manière à former des tôles épaisses (3a).

4. Procédé selon l'une des revendications 1 à 3, dans lequel les pièces spécifiques de liaison (5) présentent des parties en tôle plate, percées de perçages précis, puis pliées à au moins une extrémité de manière à joindre des éléments en tôle pliée (4) et ouvertes à d'autres extrémités pour s'adapter aux différentes dimension des éléments en tôle pliée (4).

5. Procédé d'assemblage des pièces (1) de soubassement d'un châssis de cabine (8) de véhicule (9), lesdites pièces (1) pouvant être conforme à un ensemble selon l'une quelconque des revendications précédentes, les pièces (1) étant au moins en partie des tôles (3) des éléments en tôle pliée (4) et des pièces spécifiques (5), ces dernières dites pièces spécifiques relatives à la carrosserie et au châssis, lesdites pièces étant galvanisées, percées et standard avec des dimensions, longueurs, largeurs et positionnements précis des perchages (6) par commande numérique, correspondant aux dimensions de pièces de châssis assemblés.

6. Procédé selon l'une quelconque des revendications 1 à 5 dans lequel les pièces galvanisées (3, 4, 5) sont en alliage à) base d'aluminium.

7. Procédé selon l'une quelconque des revendications 1 à 5 dans lequel les pièces galvanisées (3, 4, 5) sont en métal du type acier inoxydable ou acier noir.

8. Procédé selon l'une quelconque des revendications 1 à 6 qui comprend les étapes successives suivantes :
- Superposition de plusieurs tôles galvanisées (3) assemblées par (bouton) rivet à sertir pour former une ou plusieurs tôles d"épaisseur accrue (3a)
- Assemblage rapide des pièces (1) y compris les tôles superposées (3a) par coïncidences des perchages (6) et sertissage sans mesure spécifique.
- Montage par positionnement précis des perçages (6) respectueux de l'assemblage sur le châssis du véhicule, tenant compte des éléments présents, tel électronique de bord ,conduite élastique en Rilsan, et autres.

9. Soubassement de carrosserie, en particulier d'un faux châssis de véhicules automobiles notamment camion et/ou camionnette comprenant des éléments en tôle pliée (4) pré-soudée ou non et des pièces spécifiques de liaison galvanisée (5) de soubassement (7) qui présentent des perçages précis (6) aptes à coopérer entre eux et qui sont assemblés conformément à un procédé selon l'une des revendications précédentes avec des rivets à sertir continuant de manière respectueuse l'assemblage du châssis du véhicule.

## Claims

1. Method for the assembly of the parts of a bodywork under-structure of an automobile vehicle (17) sub-frame, especially sub-frames for trucks and sub-frames for vans, said parts (1) comprising folded metal parts (4) that are pre-welded or not and specific parts (5) wherein the latter called specific parts for the bodywork and chassis, the folded metal parts ((4) and the specific sub-frame parts (7) of an assembled chassis, **characterised in that** said parts (1) are sheet metal (3), elements made from sheet metal (4) and specific parts (5), wherein the galvanised sheets (3) are superposed prior to assembly by means of precise drilling (6) by numerical control and said precise drillings (6) are able to cooperate with one another to form a modular system (2) as required, permitting said sub-frame (7) to be made by assembling said parts (1) and folded sheet metal parts (4) and specific connecting parts (5) with pop rivets, wherein all of the parts (1) are galvanised prior to assembly of said sub-frame (7) that is designed to be assembled onto the chassis of the vehicle (7).

2. Method according to claim 1, in which the drilled holes are spaced out on the parts (1) at precise distances, in particular by means of a numerically controlled stamp, in order to form a scale for measuring the positioning of the parts (1), or sheet metal (3) or folded sheet metal elements (4) and specific connecting parts (5) for the assembly.

3. Method according to any of claims 1 or 2, in which the galvanised sheet metal and the pop rivets used for the assembly are used to form thick metal sheets (3a).

4. Method according to any of claims 1 to 3, in which the specific connecting parts (5) have flat sheet metal parts, with precisely drilled holes, then folded at at least one end so as to join the folded sheet metal elements (4) and open at other ends to adapt to the different dimensions of the folded sheet metal elements (4).

5. Assembly method for the parts (1) of the under-structure of the chassis of a vehicle (9) cabin (8), wherein said parts (1) comply with a unit according to any of the previous claims, wherein the parts (1) are at least partially made of sheet metal (3), folded sheet metal elements (4) and specific parts (5), wherein the latter specific parts concern the bodywork and the chassis, said parts are galvanised, drilled and standard with dimensions, lengths, widths and precise positions of drilled holes (6) by means of numerical control, corresponding to the dimensions of the assembled chassis parts.

6. Method according to any of claims 1 to 5, in which the galvanised parts (3, 4, 5) are made of an aluminium based alloy.

7. Method according to any of claims 1 to 5, in which the galvanised parts (3, 4, 5) are made of a stainless steel or black steel type metal.

8. Method according to any of claims 1 to 6, which comprises the following successive steps:
- Superposition of several galvanised metal sheets (3) assembled by (bolts) pop rivets to form one or more sheets of greater thickness (3a),
- Rapid assembly of the parts (1) including the superposed metal sheets (3a) by alignment of the drilled holes (6) and pop riveting without specific measurement,
- Assembly by precise positioning of the drilled holes (6) respecting the assembly on the vehicle chassis, taking into account the elements present, such as on-board electronics, Rilsan electrical ducts, and others.

9. Bodywork under-structure, in particular a sub-frame for automobile vehicles, especially trucks and vans, comprising folded metal parts (4) that are pre-welded or not and specific galvanised connecting parts (5) of the under-structure (7) which have precisely drilled holes (6) that are able to cooperate with one another and that are assembled in compliance with a method according to any of the previous claims with pop rivets continuing to respect the assembly of the chassis of the vehicle.

## Patentansprüche

1. Verfahren für den Anbau von Teilen eines Karosserieunterbaus von einem Scheinfahrgestell für Fahrzeuge (17) insbesondere für Lastkraftwagen (LKW), und ein Scheinfahrgestell eines Kleinlastwagen; die so genannten Teile (1) bestehen aus vorgeschweisten gefalzte Bleche (4), oder enthalten auch spezifische Teile (5), die so genannten spezifische Teile objektbezogen für Karosserie und Fahrgestell, die gefalzten Blechelemente (4) und die spezifischen Teile (5) des Unterbaus (7) von einem montierten Fahrgestell, **dadurch gekennzeichnet dass** die so genannten Teile (1) aus Blech (3), aus gefalzte Blechelemente (4) und aus spezifische Teile (5) die Bleche galvanisiert (3) sind überlagert werden vor dem Zusammenbau an Hand von präzisen Bohrungen (6) über NC-Steuerung und die so genannten präzisen Bohrungen (6), unter sich zusammenwirkend, ein modular System (2) nach Wunsch bilden; so erlauben sie die Herstellung des so genannten Unterbau (7) durch Zusammenbau des so genannten Teile (1) gefalzte Blechelement (4) und die spezifischen Verbindungsteile an hand von eingerasteten Nieten die Gesamtheit der Teile (1) galvanisiert werden bevor sie zusammen gebaut als Unterbau (7) zweckbestimmt für die Montage an das Fahrgestell (7) des Fahrzeuges.

2. Verfahren nach Anspruch (1) indem die Bohrungen der Teile (1) genau und mit präzisen Abstände angebracht sind, hauptsächlich an Hand eines NC-Gesteuerter Locher, und **dadurch** die Verfügung einer Mess-Skala zur Positionierung der Teile (1), die Bleche (3), die gefalzten Bleche (4), die spezifischen Verbindungsteile (5) während dem Zusammenbau in Griff zu bekommen.

3. Verfahren nach Anspruch 1 oder 2 indem die galvanisierten Bleche und die einen gerasteten Crimpnieten dazu dienen dicke Bleche (3a) herzustellen.

4. Verfahren nach einzelnen Anspruch 1 bis 3, wo die spezifischen Verbindungsteile (5) Flachbleche aufweisen welche mit formgerechten Bohrungen und ebenso zum mindesten an einem seiner Enden gefalzte Bleche aufweisen, so dass die Blechelemente (4) angeschlossen und am anderen Ende geöffnet und so den verschiedenen Abmessungen entspricht.

5. Zusammenbau verfahren der Teile (1) zum Unterbau von einer Fahrkabine (8) eines Fahrzeuges (9), die so genannten Teile (1) einem Gesamtbau entspricht, gleich und gemäß der verschiedenen einzelnen vorhergehenden Ansprüche der Teil (1) die wenigstens teilweise aus Blechteile (3) und Blechelemente (4) sowie die spezifischen Teile (5) relativ, zu der Karosserie und dem Fahrgestell, alle so genanten Teile galvanisiert sind, die Bohrungen standardisiert auch die Massen, Länge, Breite, und genaue Positionsbestimmungen der Bohrung (6) durch NC-Steurung, entsprechend in den Massen des Zusammenbaus des Fahrgestelle.

6. Verfahren nach den verschiedenen einzelnen Ansprüchen 1 bis 5 in welchen die galvanisierten Teile (3, 4, 5) aus einer Aluminiumlegierung bestehen.

7. Verfahren nach den verschiedenen einzelnen Ansprüchen 1 bis 5 in welchen sie aus einer Metallausführung wie Edelstahl oder Schwarzstahl bestehen.

8. Verfahren nach den verschiedenen einzelnen Ansprüchen 1 bis 6, die folgenden Einzelstufen unterliegen :
- Überlagerung von mehreren galvanisierten Bleche (3) montiert mit Bolzen oder gerastete Crimpelnieten, und ergeben daher eine u/o mehrere gesteigerte Blechdicke (3a).
- Schneller Zusammenbau der Teile (1) einbegriffen die überlagerte Bleche (3a), durch Koinzidenz und crimpen der Bohrungen (6) ohne spezifischen Masse.
- Zusammenbau durch präzise Positionierung , achtungsvoll der obigen Elemente des Fahrgestelle des Fahrzeuges mit Anpassung der vorgegebene Elemente sowie Bordelektronik, elastische Rilsan - Röhre, u.s.w., ...

9. Karosserieunterbau, insbesondere, ein Scheinfahrgestell für automobile Fahrzeuge, Lastkraftwagen u/o Kleinkraftwagen die aus folgenden Elemente bestehen: Elemente aus gefalztem Blech (4) vorgeschweißt oder auch nicht, spezifische galvanisierte Verbindungs-Teile (5) für den Unterbau (7) wo präzise Bohrungen (6) vorhanden sind die unter sich kooperieren und Sachgemäß dem Vorgang dem vorgehenden Anspruch mit Crimpelnieten und Rücksicht auf das Fahrgestell des Fahrzeuges.
